# EUROPEAN PATENT SPECIFICATION

(11) **EP 1 463 649 B1**
(45) Date of publication and mention of the grant of the patent: **27.07.2005**
(21) Application number: 02788446.9
(22) Date of filing: 27.12.2002
(51) Int. Cl.: B60K 6/04, F02B 19/12

(54) **COLD-FLAME PROPULSION SYSTEM**
ANTRIEBSSYSTEM MIT KALTER FLAMME
SYST ME DE PROPULSION FLAMME FROIDE

(30) Priority: 04.01.2002 CH 14022002
(43) Date of publication of application: 06.10.2004
(73) Proprietor: Dauber Holdings Inc., Obarrio, Panama City (PA)
(72) Inventor: RIGAZZI, Pier, Andrea, CH-6982 Agno (CH)
(74) Representative: Fiammenghi-Domenighetti, Delfina
(86) International application number: PCT/IB2002/005691
(87) International publication number: WO 2003/059675

(56) References cited:
- EP-A- 1 129 890
- US-A- 3 566 717
- US-A- 4 565 167
- US-A- 5 586 613
- PATENT ABSTRACTS OF JAPAN vol. 2000, no. 02, 29 February 2000 (2000-02-29) & JP 11 332019 A (TOYOTA MOTOR CORP), 30 November 1999 (1999-11-30)

## Description

The present invention relates to the sector of motor vehicles in general and more particularly those which use units (linear generators and/or crankshaft engines) where combustion of the fuel takes place in accordance with the method - devised by the same inventor and described in the international publication number WO-A-9 820 240 - which allows a reduction in the production of pollutants (UHC, CO, NOₓ) by keeping the flame at suitably low temperatures and by ensuring that the end part of the combustion occurs in the presence of a quantity of air which is considerably greater than the required stoichiometric quantity. A generally known propulsion system is disclosed in EP-A-129 890.

For the abovementioned reasons, the internal-combustion units which use this method are termed "cold-flame" and this definition will therefore be used also in the remainder of the present description.

As is known, the abovementioned method is based on the dynamic action which the expansion of the air contained in the rear part of a prechamber exerts on the flame front generated by combustion, and the intensity of this action, namely the speed of return of the flame front towards the outlet of the prechamber, depends on the volume of the said air-containing part and on the withdrawal speed curve of the piston or pistons during the period of time in which combustion occurs. As a result the withdrawal speed of the piston cannot vary beyond certain limits without causing a return of the flame front which is either too rapid, with it leaving the prechamber and as yet uncombusted mixture being introduced into the cylinder, or too slow, with excessive advancing of the flame front itself towards the rear part of the prechamber, and the dispersion of the still uncombusted mixture in the air contained there, which air, however, must remain "clean" in order for the method to produce the desired results.

The power generated by a cold-flame unit may therefore be regulated only within given limits by means of variation in the number of operating cycles per unit of time, with speeds which, increasing from a minimum value up to a value about 1.5 times greater, result in a corresponding increase in power (the efficiency remaining practically unvaried) from its minimum value to the maximum value insufficient to cover the range of values required by an internal-combustion unit for the purposes of mechanical traction.

In view of the low energy per cycle generated in a cold-flame combustion unit, it is also not possible to reduce beyond certain limits the quantity of fuel burned in a cycle without producing inadmissible negative effects both on the overall efficiency and on the temperatures inside the cylinder, which may become too low, resulting in the production of carbon monoxide (CO) and uncombusted hydrocarbons (UHC).

This combination of factors results in the difficulty of using a cold-flame combustion unit for medium or medium-to-high power outputs, by regulating the number of cycles and the variation in the load, it only being possible to vary the value of the power between a minimum value and a value 4-6 times greater.

The inventor of the present invention has had the idea that, in order to avoid all the problems described above, it is required to divide up the power which must be generated, distributing it among several cold-flame combustion units associated with each other so as to form a suitable propulsion system for a motor vehicle.

For the management of a motor vehicle it is necessarily required to generate, in addition to the mechanical energy for traction, also a quantity of electric energy for carrying out necessary services such as injection of the fuel, its ignition, illumination and accessory services of various types.

The inventor has therefore ascertained that the abovementioned problems may be avoided by equipping a motor vehicle with one or more cold-flame current generators (of the type described in the application PCT/EP95/02054 in the name of the same inventor) which produce in the form of electric energy a suitable fraction of the total power necessary for a motor vehicle, this energy meeting the electrical requirement and also supplying one or more electric motors intended for traction, and with a cold-flame crankshaft engine which produces mechanical energy having a power which varies between a minimum value, substantially coinciding with the maximum value of the power emitted by the generator(s), and a maximum value 4-5 times greater.

With this propulsion system it is possible to move a motor vehicle firstly using only the power produced by the generators for the purposes of traction, and then using only the crankshaft engine with power outputs increasing within the (maximum) power fraction generated by it, and then adding again during the final stage the power produced by the generators which are again gradually actuated up to their maximum power.

The generator, or one of the generators, must however always continue to operate at suitable speeds in order to produce the electric energy required by the motor vehicle as a whole.

Using this propulsion system, as will be seen more clearly below, it is possible to achieve results in terms of efficiency and specific consumption which are extraordinarily advantageous, even significantly more so during the urban cycle, so that the total power required is limited to few kW, resulting moreover in a negligible level of environmental pollution.

This is due to the fact that each unit is always used, individually or in combination with the other units, at a power level corresponding to an optimum efficiency value.

An example of embodiment of a propulsion system according to the invention will now be described, with reference to some numerical values which will highlight the importance of the results achieved.

In the said description reference will also be made to the accompanying figures wherein:
1) Figure 1 shows the block diagram of an example of embodiment of the propulsion system according to the invention applied to a four-wheel vehicle;
2) Figure 2 shows a diagram which illustrates the overall efficiency curves of a single cold-flame unit and an internal-combustion unit of the conventional type with an increase in the percentage power used;
3) Figure 3 shows a diagram which illustrates the overall efficiency curves of a cold-flame propulsion system according to the invention and a propulsion system of the conventional type as a function of the power used.

In the particular case described here it has been assumed that the maximum power of the propulsion system is 50 HP.

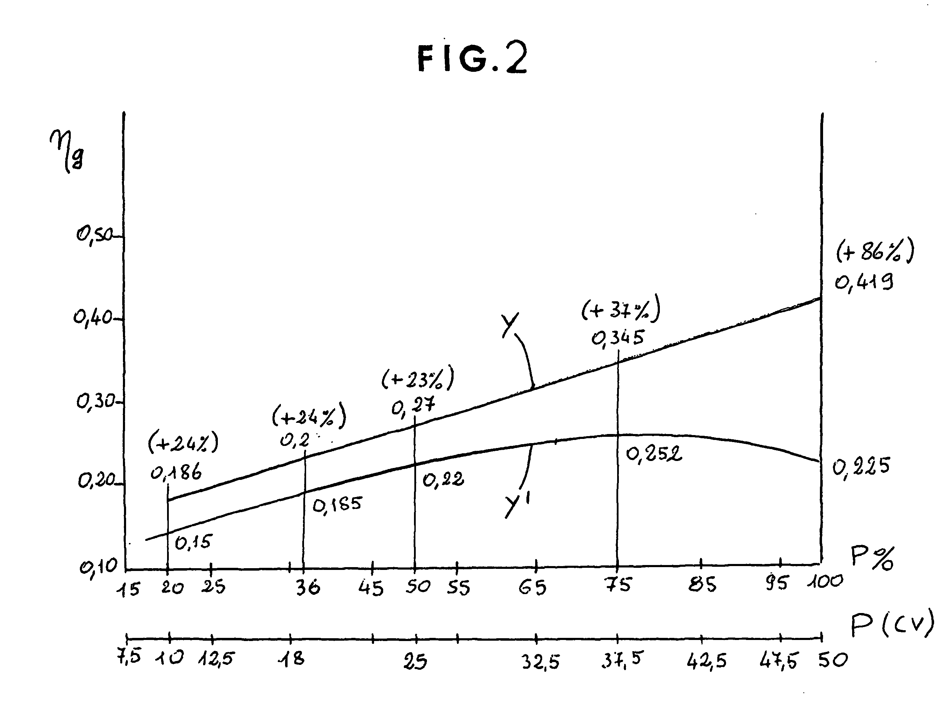

If only one cold-flame unit were to be used in order to generate this power, an efficiency trend as indicated by the curve Y situated in the uppermost part of the diagram according to Fig. 2 would be obtained, with an overall efficiency value which varies from about 0.186 at a power output of 10 HP up to 0.419 at a maximum power of 50 HP.

The efficiency values would be significantly higher in each speed range compared to those indicated by the curve Y¹ for a propulsion unit of the conventional type, but the minimum power which can be used with a good level of efficiency would be 10 HP, namely it would have a value which is too high to be able to initiate the movement of a motor vehicle without jolting.

A cold-flame unit with this power output, especially in the case of linear generators, would also have excessively large dimensions.

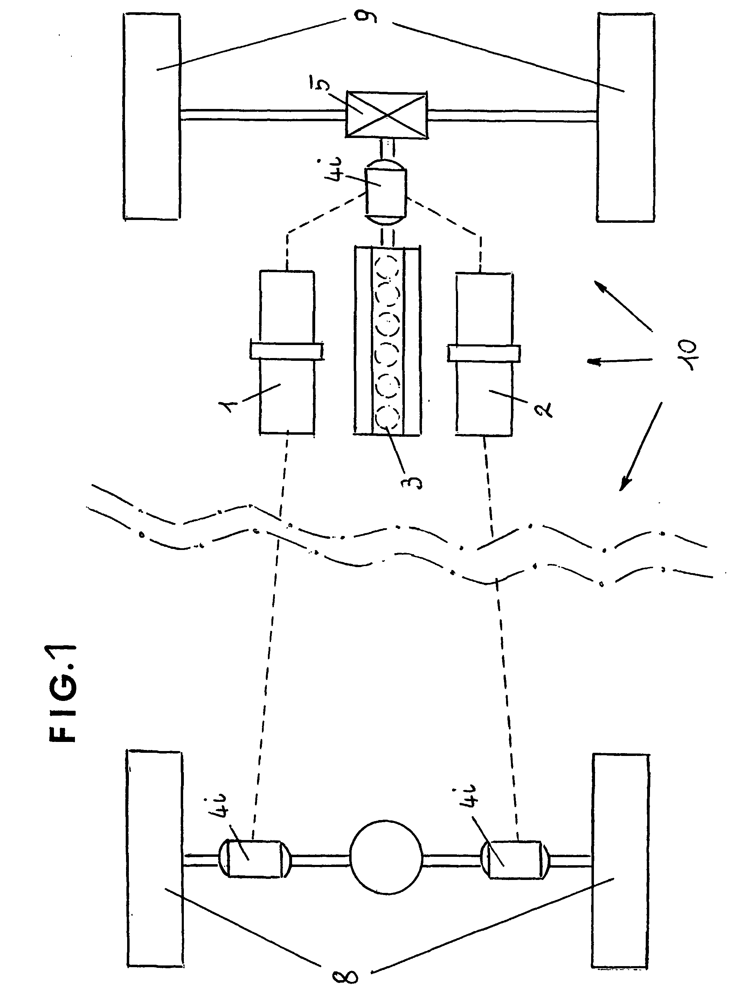

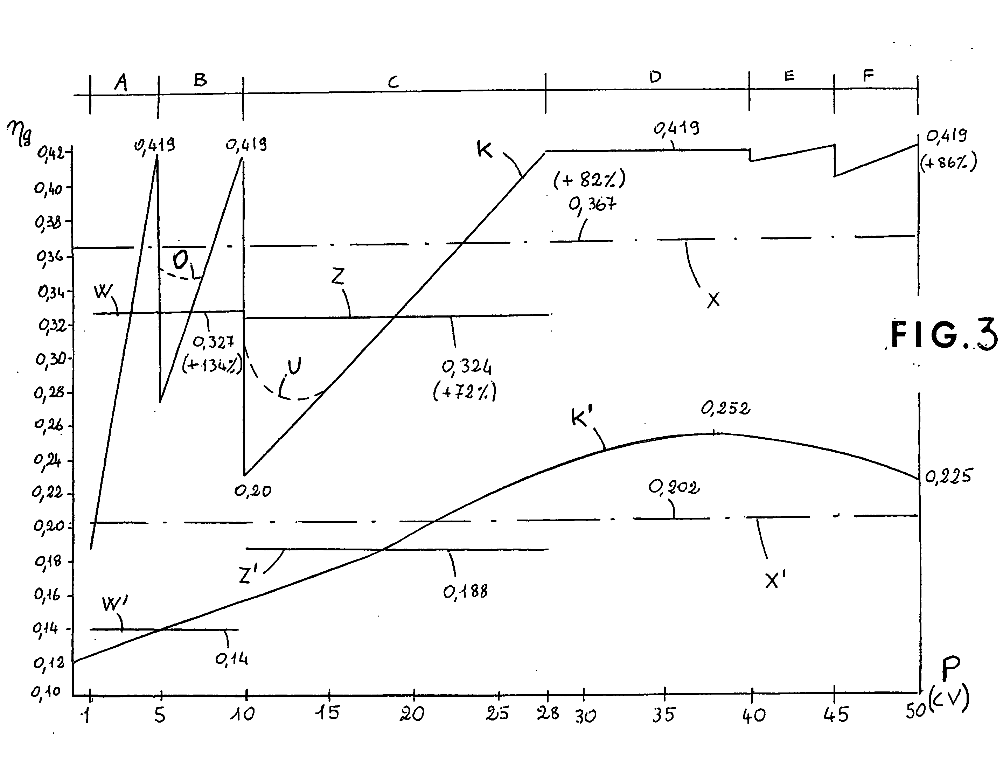

If, however, the propulsion system according to the invention indicated by the reference number 10 in Figure 1 is used, it is possible to obtain the efficiency value curve K shown in Fig. 3, with values still higher in any speed range compared to those indicated by the curve K¹ in the same figure for a conventional propulsion unit and values superior by an unusually significant amount compared to the latter in the power range between 1 and 10 HP normally used in the urban cycle of a motor vehicle.

The horizontal lines W, W¹ indicating the average efficiency within this power range of the two propulsion systems show how the system according to the invention has an average efficiency 2.34 times that of a system of the conventional type (the percentage increases in the efficiency are shown in brackets). This means, in other words, that a car with a conventional propulsion system which travels, in a town, an average distance of 10 km per litre of fuel is able to travel as much as 23.4 km using the propulsion system according to the present invention.

Also in the power range of 10 to 28 HP, intended for mixed road/town use, the average efficiency of a cold-flame propulsion system according to the invention (indicated by the line Z) is 1.72 times greater than that (indicated by the line Z¹) of a conventional propulsion system.

Finally, overall, the average efficiency in the power range of 1 to 50 HP (indicated by the dot-dash line X) is 1.82 times greater than that (similar line X¹) of a propulsion unit of the conventional type, with the result of increasing 1.82 times the average distance travelled in kilometres per litre of fuel.

This result is obtained by using each cold-flame unit within an optimum efficiency range, in which the efficiency passes from about 0.186 at minimum power to 0.419 at maximum power, and combining the action of several units so as to generate the power necessary in all conditions of use.

According to a solution preferred by the inventor, the propulsion system 10 according to the invention, shown schematically in Figure 1, is composed of two cold-flame linear generators 1, 2 which can be actuated separately or in pair and are associated with a two-stroke cold-flame crankshaft engine 3.

The said generators 1, 2, which in any case operate so as to produce all the electric energy required by the vehicle, supply with their residual power one or more electric motors 4i which are mechanically connected to the axle of one or more pairs 8, 9 of driving wheels.

Figure 1 also shows two electric motors 4i connected to the axle of the rear wheels, but also the solution of applying only one electric motor to the output shaft of the crankshaft engine 3 may be used without problems, depending on the characteristics (two or four driving wheels) and the performance to be imparted to a motor vehicle.

As regards the management of the various units 1, 2, 3 forming a propulsion system 10 according to the invention, an example will now be described, with reference also to that shown in Fig. 3.

For the reasons already illustrated above, in a cold-flame unit, in order to achieve an overall efficiency of between 0.186 and 0.419, it is possible to vary the frequency of the cycles by about 40-50%, for example between 1400 rpm and 2000 rpm, and the quantity of combusted mixture between a minimum value and a value about double the latter.

Owing to the fall in the efficiency with decreasing quantities of mixture (i.e. reduction in the load), consequently, by adding together the effects of the two variations, an output power for an individual unit equivalent to between 20% and 100% of the maximum power is obtained.

In the case considered here, the two said generators 1, 2 of the linear type each produce a power output of between 1 HP and 5 HP.

The initial movement of the vehicle is therefore performed by means of a single generator (segment A in Fig. 3), which operates at a practically constant speed with a load which increases from an initial minimum value to a value double that, and with a power output, as mentioned, of between 1 and 5 HP.

If it is required to increase the power, the second generator is also activated at half of its maximum power and reducing at the same by half the power generated by the first generator, so as not to cause power surges during this transition. The two generators, increasing their load up to the maximum value, therefore produce together an overall power which varies between 5 and 10 HP (segment B).

If it is required to increase the power still further, the piston engine is actuated with minimum power (10 HP) at 65% of the load, excluding from traction the two generators (one of which continues to operate at a speed suitable for supplying electric current to the system and to the motor vehicle in general).

Since the rated power of the piston engine is substantially identical to the overall maximum power of the two generators, there is no surge in power and it is possible to increase its power (segment C) from 10 to 28 HP by regulating the quantity of fuel with still the same operating frequency (for example 1400 rpm).

In order to increase the power even further (segment D) it is possible at this point to increase the operating speed of the engine from 1400 to 2000 revolutions without modifying the load, which remains constantly at its maximum value, causing the power to rise from 28 to 40 HP.

In order to increase the power yet further, it is again possible to arrange in succession (segments E, F) the two generators which, adding their power fractions to maximum power fraction of the engine, increase the power output to its maximum value of 50 HP.

In order to decrease the power, obviously, it is sufficient to perform the same operations described hitherto in the reverse manner and sequence.

The method described above is not the only one possible, it being also possible to regulate in different ways and/or different sequences the load/speed operating variables of the various units of the system.

By drawing limited quantities of energy from a flywheel which may be formed by batteries, capacitor systems, etc., it is possible to improve further the efficiency curve by "smoothing" the connecting angles between the segments A, B and C, as indicated by the broken lines O, U.

In order to obtain a suitable and continuous regulation of the torque or the driving torques with variation in the speed of a motor vehicle it is preferable to envisage the incorporation of an automatic gear unit (indicated by 5 in Fig. 1) between the traction units or some of them and the driving wheels.

It should be noted that the overall efficiency values of the propulsion system 10 in question, referred to in the description and the figures, are obtained with each cold-flame unit 1, 2, 3 operating with a compression ratio of 8.8:1.

By increasing this ratio within certain limits it is possible to achieve even higher efficiency values.

## Claims

1. Propulsion system (10) for a motor vehicle able to generate also the electric energy necessary for the motor vehicle, comprising:
a) one or more cold-flame linear current generators (1, 2) able to produce in the form of electric energy a fraction of the total power necessary for the motor vehicle, this fraction of power comprising also the electrical requirement of the motor vehicle, and the remaining power being supplied to one or more electric motors (4) used for traction purposes;
b) a cold-flame crankshaft engine (3) able to produce mechanical power for traction, variable between a minimum value, substantially coinciding with the maximum value of the power generated for traction purposes by the said one or more generators (1, 2), and a maximum value about 4-5 times greater.

2. Propulsion system (10) according to Claim 1, **characterized in that** it comprises:
- one or more cold-flame linear current generators (1, 2) generating overall a power output equal to about 1/6 to 1/5 of the total power of the propulsion system;
- a two-stroke cold-flame internal-combustion engine (3) able to produce mechanical energy for a power output which may vary between about 1/6-1/5 and about 5/6-4/5 of the total power of the propulsion system;
- one or more electric motors (4i) connected to one or more pairs of driving wheels (A, B) of the motor vehicle and supplied by the said generators (1, 2).

3. Propulsion system according to one of the preceding claims, in which the said linear current generators (1, 2) are two in number, each of them therefore generating a power equal to about 1/12 to 1/10 of the total power of the propulsion system.

4. Propulsion system according to one of the preceding claims, incorporating an automatic gear unit (5) arranged between the propulsion system and one or more pairs of driving wheels.

## Patentansprüche

1. Antriebssystem (10) für ein Motorfahrzeug, das auch zur Erzeugung von elektrischer Energie geeignet ist, wie sie für das Motorfahrzeug erforderlich ist, aufweisend:
a) einen oder mehrere Kaltflamme-Linearstromgeneratoren (1, 2), die dazu geeignet sind, in Form elektrischer Energie einen Bruchteil der Gesamtleistung zu erzeugen, wie sie für das Motorfahrzeug erforderlich ist, wobei dieser Bruchteil der Energie gleichzeitig dem elektrischen Energiebedarf des Motorfahrzeugs entspricht, und die verbleibende Energie zu einem oder zu mehreren Elektromotoren (4) geliefert wird, die zu Fahrtzwecken verwendet werden,
b) einen Kaltflamme-Kurbelwellenmotor (3), der zur Erzeugung mechanischer Fahrtleistung geeignet ist, die zwischen einem Minimalwert, der im wesentlichen mit dem Maximalwert der Leistung übereinstimmt, die für Fahrtzwecke durch den einen oder die mehreren Generatoren (1, 2) erzeugt wird, und einem Maximalwert veränderlich ist, der ungefähr 4 bis 5 Mal größer ist.

2. Antriebssystem nach Anspruch 1,
**dadurch gekennzeichnet,**
**dass** es aufweist:
einen oder mehrere Kaltflamme-Linearstromgeneratoren (1, 2), die eine Gesamtausgangsleistung erzeugen, die ungefähr 1/6 bis 5/6 der Gesamtleistung des Antriebssystems entspricht,
einen Zweitakt-Kaltflamme-Verbrennungsmotor (3), der zur Erzeugung mechanischer Energie für eine Leistungsabgabe geeignet ist, die zwischen ca. 1/6 - 1/5 und ca. 5/6 - 4/5 der Gesamtleistung des Antriebssystems variieren kann,
einen oder mehrere Elektromotoren (4i), die an einem oder mehreren Paar(en) Antriebsräder (A, B) des Motorfahrzeugs angeschlossen sind und durch die Generatoren (1, 2) gespeist werden.

3. Antriebssystem nach einem der vorhergehenden Ansprüche,
wobei die Linearstromgeneratoren (1, 2) zwei an der Zahl sind, von welchen jeder eine Leistung erzeugt, die ca. 1/12 bis 1/10 der Gesamtleistung des Antriebssystems entspricht.

4. Antriebssystem nach einem der vorhergehenden Ansprüche,
das eine Automatikgetriebeeinheit (5) enthält, die zwischen dem Antriebssystem und einem oder mehreren Paaren Antriebsräder angeordnet ist.

## Revendications

1. Système de propulsion (10) pour un véhicule à moteur, apte à générer également l'énergie électrique nécessaire pour le véhicule à moteur, comprenant:
a) un ou plusieurs générateurs de courant linéaire de flamme froide (1, 2) capables de produire sous la forme d'énergie électrique une fraction de la puissance totale nécessaire pour le véhicule à moteur, cette fraction de puissance comprenant également les besoins électriques du véhicule à moteur, et la puissance résiduelle étant fournie à un ou plusieurs moteurs électriques (4) utilisés à des fins de traction;
b) un moteur de vilebrequin à flamme froide (3) capable de produire une puissance mécanique de traction variable entre une valeur minimale qui coïncide sensiblement avec la valeur maximale de la puissance générée à des fins de traction par ledit ou lesdits générateurs (1, 2), et une valeur maximale environ 4 à 5 fois supérieure.

2. Système de propulsion (10) selon la revendication 1, **caractérisé en ce qu'**il comprend:
- un ou plusieurs générateurs de courant linéaire de flamme froide (1, 2) générant globalement une puissance utile égale à environ 1/6 à 1/5 de la puissance totale du système de propulsion;
- un moteur à combustion interne à flamme froide à deux temps (3) capable de produire une énergie mécanique pour une puissance utile pouvant varier entre environ 1/6 à 1/5 et environ 5/6 à 4/5 de la puissance totale du système de propulsion;
- un ou plusieurs moteurs électriques (4i) reliés à une ou plusieurs paires de roues motrices (A, B) du véhicule à moteur et alimentés par lesdits générateurs (1, 2).

3. Système de propulsion selon l'une des revendications précédentes, dans lequel lesdits générateurs de courant linéaire (1, 2) sont au nombre de deux, chacun d'eux générant par conséquent une puissance égale à environ 1/12 à 1/10 de la puissance totale du système de propulsion.

4. Système de propulsion selon l'une des revendications précédentes, comportant une unité de transmission automatique (5) disposée entre le système de propulsion et une ou plusieurs paires de roues motrices.
